# EUROPEAN PATENT SPECIFICATION

(11) **EP 2 577 975 B1**
(45) Date of publication and mention of the grant of the patent: **02.09.2020**
(21) Application number: 11792812.7
(22) Date of filing: 16.03.2011
(51) Int. Cl.: H04N 7/173, H04N 21/858, H04N 21/472, H04N 21/475, H04N 21/4782, H04N 21/434

(54) **SCRIPTED INTERACTIVITY FOR NON-REAL-TIME SERVICES**
SKRIPTGESTÜTZTE INTERAKTIVITÄT FÜR NICHT-ECHTZEIT-DIENSTE
INTERACTIVITÉ PRÉPARÉE D'AVANCE POUR DES SERVICES HORS TEMPS RÉEL

(30) Priority: 14.06.2010 US 354515 P; 07.06.2010 US 352275 P; 02.03.2011 US 201113038967; 20.08.2010 US 375415 P
(43) Date of publication of application: 10.04.2013
(73) Proprietor: Saturn Licensing LLC, New York, NY 10022-3211 (US)
(72) Inventor: EYER, Mark, Kenneth, Woodinville, WA 98072 (US)
(74) Representative: Witte, Weller & Partner Patentanwälte mbB
(86) International application number: PCT/US2011/028678
(87) International publication number: WO 2011/156036

(56) References cited:
- US-A1- 2002 056 129
- US-A1- 2005 160 461
- US-A1- 2006 271 971
- US-A1- 2007 219 958
- US-A1- 2008 013 919
- US-A1- 2009 276 819
- US-A1- 2010 021 130
- US-A1- 2010 050 070
- US-A1- 2010 134 701
- US-A1- 2010 134 701
- US-A1- 2010 293 586
- Atsc Standard: "DTV APPLICATION SOFTWARE ENVIRONMENT LEVEL 1 (DASE-1) PART 1: INTRODUCTION, ARCHITECTURE, AND COMMON FACILITIES", , 9 March 2003 (2003-03-09), XP55154189, Retrieved from the Internet: URL:http://www.atsc.org/cms/standards/a100 /a_100_1.pdf [retrieved on 2014-11-20]
- ATSC STANDARD: "A/93, ATSC Standard: Synchronized/Asynchronous Trigger", NOT KNOWN,, 1 April 2002 (2002-04-01), XP030001593,
- Atsc Standard: "ATSC Candidate Standard: Non-Real-Time Content Delivery", , 2 December 2010 (2010-12-02), XP55154192, Retrieved from the Internet: URL:http://www.atsc.org/cms/standards/cs_d ocuments/TSG-876r1-NRT-CS.pdf [retrieved on 2014-11-20]

## Description

### BACKGROUND

A triggerable declarative object (TDO) is a downloadable object created by a content creator or service provider, which includes declarative content (text, graphics, descriptive markup, scripts, and audio) whose function and behavior is tied in some way to digital television programming that it accompanies. Standards defining TDOs specify associated available behaviors, appearance, trigger actions, and transport methods for content and metadata.

US 2010/0134701 A1 discloses a digital television receiver that receives non-real time (NRT) content, wherein the digital television receiver has an IP demultiplex or a radio frequency tuner that receives a transport stream. The output transport stream contains an IP packet stream containing NRT content, a FLUTE file description table (FDT) and NRT metadata.

Further similar systems and methods are known from ATSC Standard: "DTV APPLICATION SOFTWARE ENVIRONMENT LEVEL 1 (DASE-1) PART 1: INTRODUCTION, ARCHITECTURE, AND COMMON FACILITIES", 9 March 2003, retrieved from the Internet: URL:http://ww.atsc.org/cms/standard/a100/a_100_1.pdf [retrieved on 2014-11-20] as well as from US 2006/271971 A1.

### BRIEF DESCRIPTION OF THE DRAWINGS

Certain illustrative embodiments illustrating organization and method of operation, together with objects and advantages may be best understood by reference detailed description that follows taken in conjunction with the accompanying drawings in which:
**FIGURE 1** is an example of a flow chart of a process for implementation of a method consistent with certain embodiments of the present invention.
**FIGURE 2** is an example of a block diagram of a system that assembles video and TDOs at a broadcaster or other service provider in a manner consistent with certain embodiments of the present invention.
**FIGURE 3** is an example of a block diagram of a digital television receiver device suitable for operation in a manner consistent with certain embodiments of the present invention.
**FIGURE 4** is an example processor-centric view of a digital television receiver device suitable for operation in a manner consistent with certain embodiments of the present invention.
**FIGURE 5** is an example of a user interface such as can be rendered by a TDO in a manner consistent with certain embodiments of the present invention.
**FIGURE 6** is an example of the user interface of FIGURE 5 when operating on stored content in a manner consistent with certain embodiments of the present invention.
**FIGURE 7** is an example of the user interface of FIGURE 5 when operating on NRT content in a manner consistent with certain embodiments of the present invention.

### DETAILED DESCRIPTION

The invention is defined by the appended claims.

While this invention is susceptible of embodiment in many different forms, there is shown in the drawings and will herein be described in detail specific embodiments, with the understanding that the present disclosure of such embodiments is to be considered as an example of the principles and not intended to limit the invention to the specific embodiments shown and described. In the description below, like reference numerals are used to describe the same, similar or corresponding parts in the several views of the drawings.

The terms "a" or "an", as used herein, are defined as one or more than one. The term "plurality", as used herein, is defined as two or more than two. The term "another", as used herein, is defined as at least a second or more. The terms "including" and/or "having", as used herein, are defined as comprising (i.e., open language). The term "coupled", as used herein, is defined as connected, although not necessarily directly, and not necessarily mechanically. The term "program" or "computer program" or similar terms, as used herein, is defined as a sequence of instructions designed for execution on a computer system. A "program", or "computer program", may include a subroutine, a function, a procedure, an object method, an object implementation, in an executable application, an applet, a servlet, a source code, an object code, a script, a program module, a shared library / dynamic load library and/or other sequence of instructions designed for execution on a computer system.

The term "program", as used herein, may also be used in a second context (the above definition being for the first context). In the second context, the term is used in the sense of a "television program". In this context, the term is used to mean any coherent sequence of audio video content such as those which would be interpreted as and reported in an electronic program guide (EPG) as a single television program, without regard for whether the content is a movie, sporting event, segment of a multi-part series, news broadcast, etc. The term may also be interpreted to encompass commercial spots and other program-like content which may not be reported as a program in an electronic program guide.

Reference throughout this document to "one embodiment", "certain embodiments", "an embodiment" or similar terms means that a particular feature, structure, or characteristic described in connection with the embodiment is included in at least one embodiment of the present invention. Thus, the appearances of such phrases or in various places throughout this specification are not necessarily all referring to the same embodiment. Furthermore, the particular features, structures, or characteristics may be combined in any suitable manner in one or more embodiments without limitation.

The term "or" as used herein is to be interpreted as an inclusive or meaning any one or any combination. Therefore, "A, B or C" means "any of the following: A; B; C; A and B; A and C; B and C; A, B and C". An exception to this definition will occur only when a combination of elements, functions, steps or acts are in some way inherently mutually exclusive.

For purposes of this document, the terms "Synchronized Widget", "Triggered Declarative Object", "Triggerable Declarative Object" and "Triggered Downloadable Object" and similar terms are used synonymously and interchangeably and referred to as a "TDO". Use of this term and related terms are generally as defined and explained in detail in U.S. Patent Application Number 12/959,529 filed December 3, 2010 entitled "Announcement of Triggered Declarative Objects" to Blanchard et al.

However, the Blanchard application defines the content of the TDO and trigger somewhat more rigorously than is required in the general cases since many attributes defined therein as being a part of a TDO could be situated in the trigger or vice versa or not present at all depending upon the function and triggering of a particular TDO. As used herein, the term Triggered Declarative Object or Triggerable Declarative Object (TDO) is a downloadable software object created by a content creator or service provider. Generally, such objects have declarative content (text, graphics, descriptive markup, scripts, and audio) whose function and behavior is tied in some way to the television programming that it accompanies. Note that a TDO is generally considered as "declarative" content to distinguish it from "executable" content such as a Java applet or an application that runs on an operating system platform. While considered declarative, a TDO player supports a scripting language that is an object-oriented programming language. The TDO, in examples shown herein, are received from a service provider in advance of a time defined by a trigger object (as explained below) so that the TDO is available when the trigger arrives. Moreover, an explicit trigger signal may not be necessary and a TDO may be self-triggering or triggered by some action other than receipt of a trigger signal. Various standards bodies may define associated available behaviors, appearance, trigger actions, and transport methods for content and metadata for a TDO. Additionally, requirements regarding timing accuracy of TDO behaviors relative to audio/video may be defined by standards bodies.

As used herein a "trigger" or "announcement trigger" is a data object, bound to a particular item of programming content that references a specific TDO instance, by the use of a file name or identifier for an object that has already been downloaded. Certain TDOs will only make sense in conjunction with a certain program. An example is a TDO that collects viewer response data, such as voting on a game show or contest.

The present subject matter involves a user interaction with a TDO which causes behavior relating to Non-Real-Time (NRT) television service such as playing NRT content, storing NRT content, scheduling a download of NRT content, etc. (by way of example and not limitation). Note that the TDO concept is also applicable to content delivered in real-time, such as regular linear television programming; the present subject pertains to its functionality with regard to NRT content. NRT services generally is defined herein as audio/video content supplied on an NRT basis and may appear to the viewer (and hence may be referred to herein) as if it is simply another type of television programming. The delivery or playback of content delivered in the ATSC Non-Real-Time delivery system can be accomplished via files in a FLUTE transport for example as disclosed in U.S. Patent Application No. 12/584,171 filed September 1, 2009, publication number US2010-0134701 published June 3, 2010, entitled "Non-Real Time Services" to Eyer. Additionally, the NRT action taken by the TDO resulting from a user making a selection can result in the receiver scheduling the download of a specific item of NRT content. Some NRT content is low-latency; selection of that type of content could result in playback as soon as it was retrieved.

With regard to the exact nature of TDOs and triggers, certain information can be provided in either the TDO or the trigger without limitation. However, the two objects operate in cooperation to produce a desired function when the TDO is executed in a digital television receiver device's (such as a television set, a set-top box or other receiver that receives and processes television programming without limitation) internal processor. It is also noted that some TDOs may be self-triggering or triggered in a manner other than via a trigger object. For example, in certain implementations consistent with embodiments of the present invention, the TDO may be self-triggered as soon as it is fully received or triggered by a user act such as selection of NRT services or selection of a predetermined channel associated with NRT services or by other action than explicit receipt of a trigger object.

In accord with certain implementations consistent with embodiments of the present invention TDOs are utilized to provide a new mechanism for manipulation of NRT services including downloading NRT content, streaming of low latency NRT content, playback of stored NRT content and other manipulation including management of stored NRT content and providing a user interface for convenient access to NRT content.

In late 2010, a standards body in the United States completed a draft standard for delivery of NRT services. Three "consumption models" were described for files delivered via NRT services in this standard. For the "browse and download" and "push" models, the receiver manufacturer is expected to create the look and feel of the user interface (UI) of the service, using available metadata and graphics. In contrast, embodiments consistent with implementations of the present invention utilize a TDO to effect generation of a user interface that permits the user to carry out operations on NRT content.

The TDO according to certain implementations consistent with the present invention can be defined as part of a consumption model for the NRT service. In this situation (for this type of NRT service) the receiver retrieves or receives the TDO and may immediately execute a script carried by the TDO (or can await a triggering event such as the user selection of a predetermined channel or selection of NRT services). The TDO can be in a file within the broadcast transport, or it can be fetched from the Internet via a URL provided within the metadata defining the service. In this case, the TDO creates the "look and feel" of the NRT service. This can be defined in the standard as a new fourth consumption model which may be called "TDO-defined," or "Scripted," for example. By use of such a TDO, the broadcaster can design whatever type of appearance and navigational features they desire for that service, using the same rich authoring environment they can use when designing a typical website (for example). In so doing, the broadcaster or other service provider can provide any sort of user interface desired, many of which may resemble various electronic program guides (EPGs) and interfaces used for personal video recorders (PVR - also known as a digital video recorder or DVR).

To support NRT-specific navigation, some new types of scripted control objects can be included for use in the user interface. A scripted control object can, for example, take on the appearance of a button that can be selected and activated (pushed) by the user's operation of their remote control. One type of control object, when selected, causes the receiver to schedule a particular NRT download to occur at a future time. Another control object causes playback of an indicated item of NRT content, if that content is available in storage. Other control objects can provide for deletion, protection and other manipulation of NRT content. New functions provided to the scripting capability can include (but are not limited to):
- a function that returns true if an indicated item of content is available in storage, and false otherwise;
- a function that returns true if an indicated item of content is already scheduled for download, and false otherwise;
- a function that returns the amount of available storage in the receiver for new NRT content;
- a function that allows an item of NRT content to be deleted from storage either by activation of a control object, programmatically, or in an automatic or programmed purging process; and
- a function that allows access to Preference, Demographic, and Interests (PDI) files, to allow NRT look and feel and/or playback to be tailored to the user's personal profile for example, as described in U.S. Patent Application No. 12/985,241, filed January 1, 2011 to Mark Eyer, entitled "Receiver and Method for Reporting the Usage of Advanced Television Services.

Implementations consistent with the present teachings can be used for satellite, cable, and IPTV systems in general as well as terrestrial broadcasts.

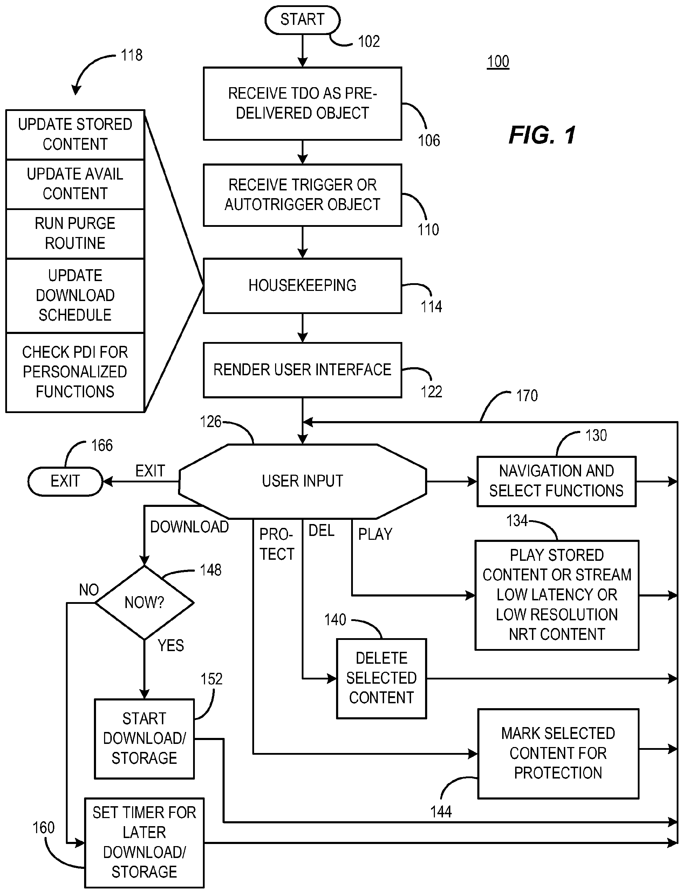

Referring now to **FIGURE 1****,** a flow chart 100 depicts an example process carried out in a manner consistent with certain implementations of the present invention starting at 102. At 106 a TDO is received as an object from the service provider or broadcaster or downloaded from an Internet site. Upon completion of receipt of the TDO if the TDO is self- triggering, or at a later time if a trigger object is used to trigger the TDO, the TDO is executed causing the script embedded therein to begin execution at 110. The TDO may then run a number of "housekeeping" routines at 1 14. When the script is executed, several initial functions 1 18 may be carried out at 114 which are preparatory to rendering the UI. In example implementations, functions can be run that update a table of contents stored locally, updating of available NRT content that can be retrieved using this UI (that is, generally the NRT content available from the current service provider or broadcaster), running any purging routines for purging out-of-date stored information, updating any download schedules that need attention and checking personalization information for any customized functions of the Ul that might be affected. The TDO then renders a user interface (UI) suitable for use by a viewer or user in manipulation of NRT content at 122. This action, in this implementation, causes an announcement to be displayed on the television display providing the viewer the opportunity to select a hyperlink or other triggered control object that can cause an NRT- service-related action to be carried out.

At this point, the user interface awaits input from the user, for example via a remote controller. If the viewer selects a control object at 126, the control object is executed and the digital television receiver device executes the appropriate function causing an NRT-related action defined by the TDO to be carried out. When an input is received at 126, the interface takes action in accord with commands issued by the user. Navigation commands are received and processed at 130 to permit the user to identify specific content or navigate among available actions. If the user selects an element of content, either stored or available as NRT content, the user may then elect at 126 to play the content by issuing appropriate commands at 134. In the case of stored content, a player function retrieves the content from local storage and begins rendering audio and video in a manner similar to that used by PVR devices. In the case of available NRT content several possibilities are available depending upon various factors. If the NRT content is low latency and or low resolution and network traffic permits, the NRT content may be streamed to the viewer. The viewer may be advised that problems may be encountered with jittery images or may be permitted to elect a lower resolution stream to optimize the viewing experience. Other variations may also be implemented including advising the viewer that a high quality stream is not possible at the present time.

If the user selects an item of locally stored content and elects to delete it at 126, then at 140 the content is deleted or reference to the content is removed from indexing on the local storage device. If the user selects an item of locally stored content and elects to protect the content at 144, the content is marked with a suitable flag to prevent accidental deletion.

If the user elects to download selected content at 126, several options are possible. If the user desires the content as quickly as possible at 148, the download can be started as quickly as possible at 152 without regard for network loading. Otherwise, the download can be scheduled either by the user or by the network for download at a later time for storage at 160. The user can elect to exit the UI at any time by making a selection at 126 to exit to 166.

After any action is carried out based on user input, at its completion each routine returns at 170 and the process then proceeds to whatever further functions may be defined by the TDO.

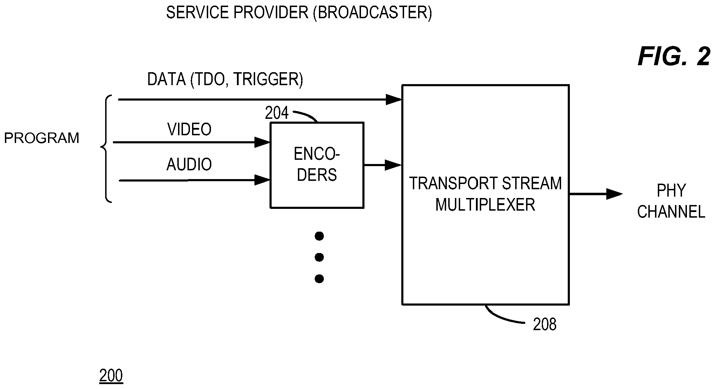

Referring now to **FIGURE 2****,** a basic diagram of an example service provider such as a broadcaster is depicted as 200. Generally speaking, a single service provider may provide multiple programs over one or more transport streams. The audio, video, caption data, etc. are provided to an encoder which encodes the data into packets suitable for distribution. The audio and video program material is encoded by audio and video encoders 204 which are then provided to a transport stream multiplexer 208 which then provides an output that can be distributed via a physical channel medium such as cable or satellite broadcast. In this discussion, the use of the term "Program" is generally consistent with that of the MPEG-2 Systems standard (ISO/IEC 13818-1). An MPEG-2 Program includes associated Elementary Stream components, such as for example one video Elementary Stream and one or more audio Elementary Streams. In accord with the implementation described above, the TDO data and its associated trigger data are also provided to the transport stream multiplexer for incorporation into the transport stream using any suitable coding. Multiple such program streams may be provided for and encoded and multiplexed into the transport stream at 208. The service provider may provide the content, TDOs etc. via cable, terrestrial broadcast, satellite or Internet without limitation.

Thus, at a service provider, a data stream may be assembled that includes a stream which pre-delivers a TDO to a digital television receiver device that carries out a programmed routine when the TDO is user activated. The TDO can include the script discussed herein to provide the viewer with a user interface for manipulation of NRT content. The stream can further deliver one or more trigger objects associated with the TDO to the television receiver device, where the trigger object causes execution of the TDO when the user makes an appropriate selection if the TDO is not to be self-starting.

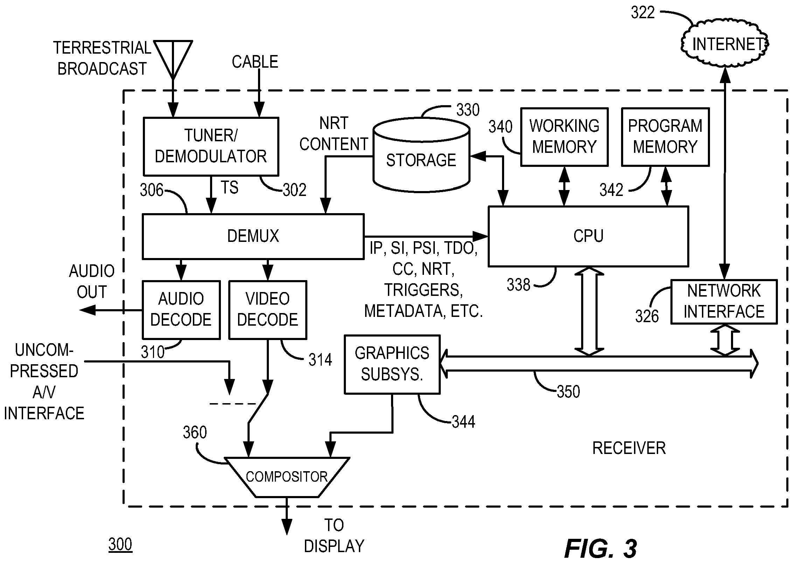

A receiver device (such as a television set or set-top box, etc.) is depicted as receiver 300 in **FIGURE 3** wherein content is received via any suitable source such as terrestrial broadcast, cable or satellite at a receiver 300's tuner/demodulator 302. The transport stream, TDOs, triggers, etc. from the tuner/demodulator 302 is demultiplexed at demultiplexer 306 into audio and video streams. The audio is decoded at an audio decoder 310 while the video is decoded at a video decoder 314. Uncompressed A/V data may also be received via an uncompressed A/V interface that can be selectively utilized.

A/V content including TDOs, data and triggers may also be received via the Internet 322 via a network interface 326. Additionally, storage 330 can be provided for non-real time (NRT) or Internet-delivered content such as Internet Protocol Television (IPTV). The locally stored content (i.e., content stored in or in close proximity to the television receiver device - e.g., within the same house, room, apartment, or local network) can be played by demultiplexing at 306 in a manner similar to that of other sources of content. The receiver generally operates under control of a processor such as CPU 338 which is interconnected to working memory 340 and program memory 342 as well as a graphics subsystem 344 via one or more buses such as 350.

The CPU 338 receives closed caption data from the demultiplexer 306 as well as any other information such as TDO announcements and electronic programming guides used for rendering graphic content and passes the information to the graphics subsystem 344 and the images are composited at the compositor and video interface 360 to produce an output suitable for display on a video display.

The CPU 338 operates to carry out various processes within the context of the subject matter disclosed herein including generation of elements used in rendering of a user interface. CPU 338 further operates to execute any scripts contained in the TDO and/or its trigger(s).

CPU 338 also operates to oversee control of the digital television receiver including the tuner/demodulator 302 and other television resources. Connection to such systems is not shown to avoid cluttering the drawing, but will be understood by those skilled in the art upon consideration of the present teachings. Hence, when the CPU 338 executes the TDO script, a User Interface is generated, the graphics of which can be rendered with the cooperation of the graphics subsystem 344.

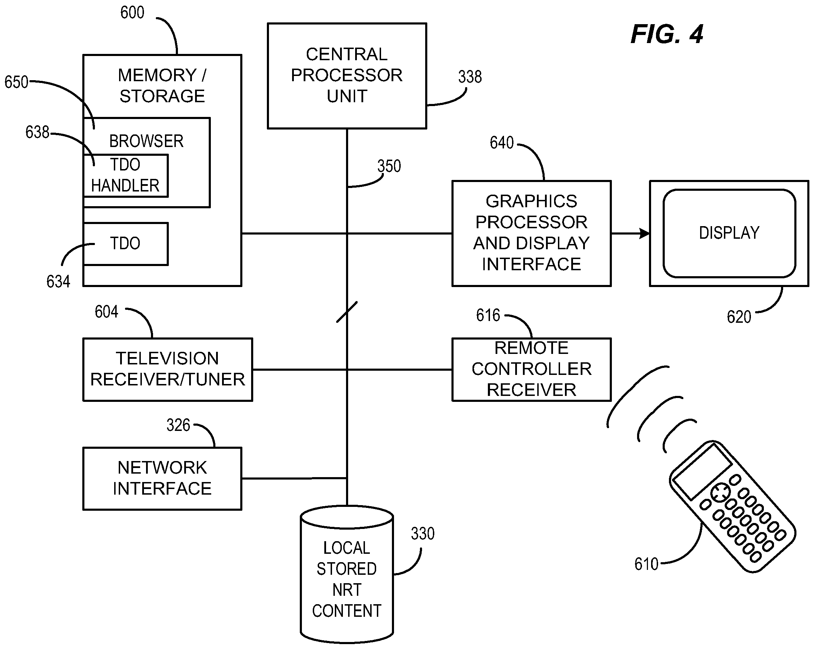

The operation in processing TDOs is depicted in a more processor-centric view in **FIGURE 4****.** Memory and storage 330, 340 and 342 are depicted collectively as 600 in **FIGURE 4** for convenience. Similarly, the various demodulators, decoders, etc. that initially process digital television signals are collectively depicted as 604. The television receiver device of **FIGURE 4** is further depicted as having a remote controller 610 which communicates with a remote controller interface 616. Additionally, the display 620 is depicted explicitly for completeness and may represent either an integral display as in a television set or a connected display device as in the case where the receiver device is realized in a television set-top box (STB).

Memory 600 contains various functional program modules and data. When a TDO object is received, the TDO 634 is stored at memory 600 along with its script that when selected causes generation of an NRT user interface with the assistance of graphics process and display interface 640. Execution of the TDO is carried out on CPU 338 with the graphics renderings handled by the graphics processor 640 (344). This TDO storage and execution is carried out at TDO handler 638 which may be integral to a browser 650. The TDO, when executed may present any suitable user interface for manipulation of NRT content either available or already downloaded under user control by manipulation of remote controller 610.

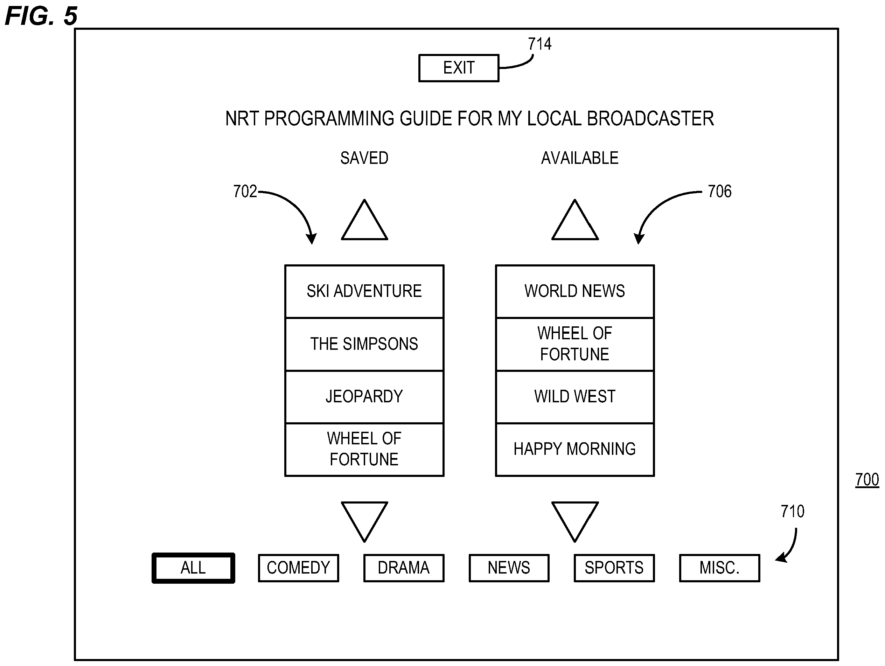

**FIGURE 5** depicts a rudimentary user interface 700 depicted purely for illustrative purposes to depict several basic NRT functions rendered available to the user by utilizing the UI provided in a TDO consistent with that described herein. In this example, two lists are provided in the interface, with one list being for NRT or other content that has been stored locally (saved) shown generally as 702. NRT content items that are available for download (or possibly streaming) are depicted in list 706 and the user can navigate up and down the list and cause the list to scroll up and down using the navigation arrows shown above and below the lists. The user can also select from a number of categories such as those listed in an array 710 at the bottom for better management of the lists by selecting a genre or category from the list shown. The user can also exit the UI at any time by selecting the Exit button 714 or carrying out an equivalent act using the remote controller.

As previously noted, the present interface is quite rudimentary and can be enhanced in many ways without departing from implementations consistent with the present invention. However, this interface is presented by way of simple illustration of the types of functions available to the user.

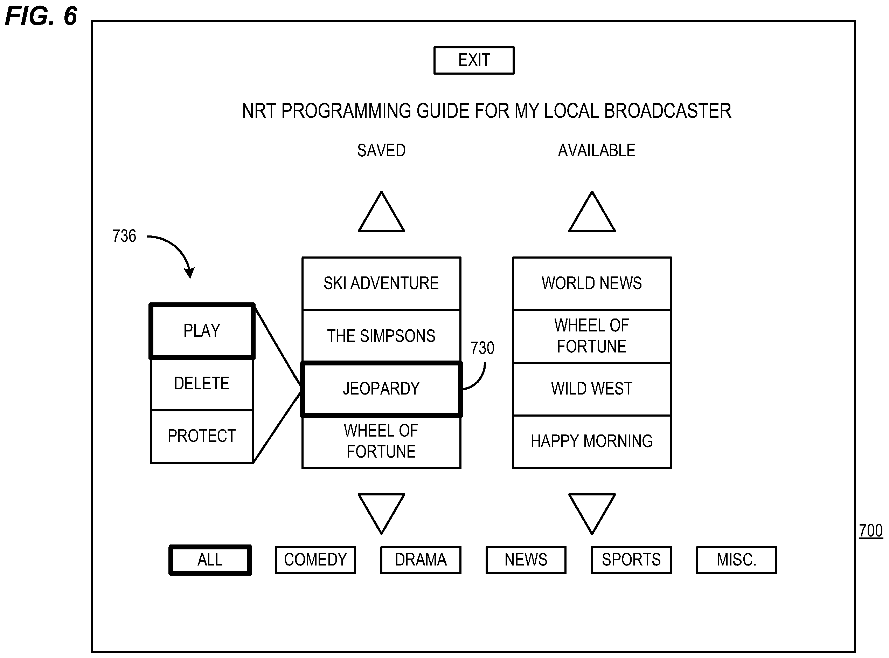

**FIGURE 6** depicts the same interface 700 as that depicted in **FIGURE 5****,** except in this illustration, an item of saved content 730 is shown as selected by virtue of the dark outline. Once selected, the viewer is presented with three options at 736 in a pop up window in this example of actions that can be taken (although those skilled in the art will appreciate upon consideration of these teachings that additional options can be provided). Those actions are as described in **FIGURE 1** and include deleting, protecting or playing the content. The dark highlight in this menu indicates that by pressing select on the remote controller (or enter or equivalent), the content will play.

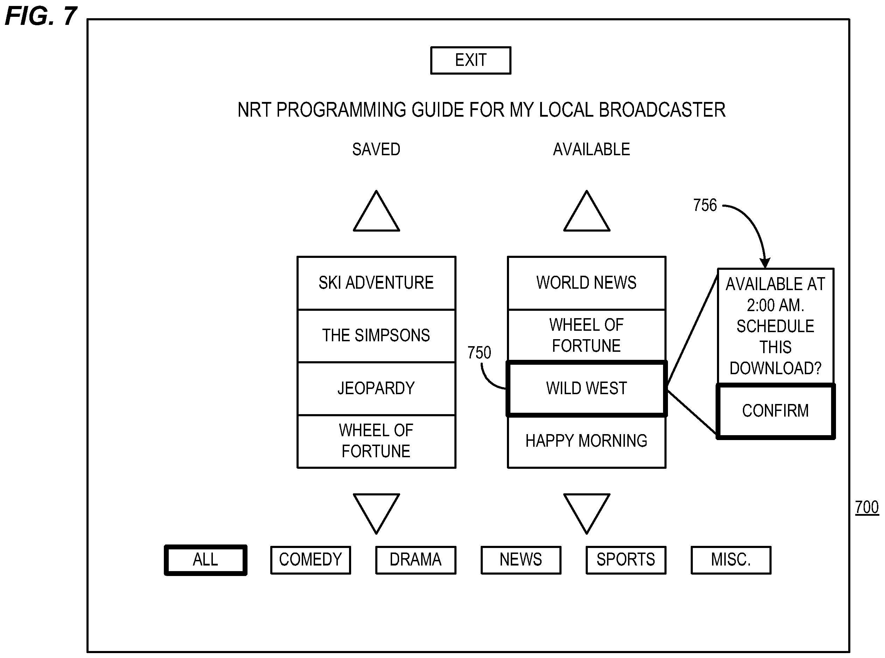

**FIGURE 7** depicts the same interface 700 as that depicted in **FIGURE 5****,** except in this illustration, an item of available NRT content 750 is shown as selected by virtue of the dark outline. Once selected, the viewer is presented with pop up window 756 indicating that a download of this content can be scheduled for 2:00 am the following morning. This example illustrates one of many actions that can be programmed into the TDO (although those skilled in the art will appreciate upon consideration of these teachings that additional options can be provided). Those actions are as described in **FIGURE 1** and include playing content that is available at low-latency, or scheduling a download at the next available opportunity (exact time designated by the service provider). The dark highlight in this menu indicates that by pressing select on the remote controller (or enter or equivalent), the content will be scheduled for an overnight download. In other embodiments, other options may be possible as will be appreciated by those skilled in the art upon consideration of the present teachings.

Thus, a method consistent with certain implementations involves receiving a triggered declarative object (TDO) at a digital television receiver device, the TDO including a scripted executable routine; the scripted executable routine comprising a script that generates a user interface that presents a viewer with options for selection of items of non-real-time (NRT) television service for viewing or downloading; initiating the execution of the TDO by the digital television receiver device to initiate display of the NRT service; and where the method supports a plurality of scripted control objects and functions including but not limited to: a control object that when selected causes the receiver to schedule a particular NRT download to occur at a future time; a control object that when selected causes playback of an indicated item of NRT content when that content is available in local storage; a function that returns an indication of whether or not a specified item of NRT content is available in local storage; a function that returns an indication of whether or not a specified item of NRT content is already scheduled for download; a function that returns an amount of available local storage; and a function that deletes a specified item of NRT television service from storage.

Another method involves receiving a triggered declarative object (TDO) at a digital television receiver device, the TDO including a scripted executable routine; the scripted executable routine comprising a script that defines a user interface (UI) for manipulation of non-real-time (NRT) content; initiating the operation of the TDO; and the digital television receiver, executing operations to present the user with the user interface.

In certain implementations, the TDO player supports a user interface having a control object that when activated causes the receiver to schedule a particular NRT download to occur at a future time. In certain implementations, the TDO player supports a user interface which comprises a control object that causes playback of an indicated item of NRT content when that content is available in local storage. In certain implementations, the TDO player supports a script which includes a function that returns an indication of whether or not an item of NRT content is available in local storage. In certain implementations, the TDO player supports a script which includes a function that returns an indication of whether or not an item of NRT content is already scheduled for download. In certain implementations, the TDO player supports a script which includes a function that returns the amount of available local storage. In certain implementations, the TDO player supports a script which includes a function that deletes an item of NRT content from storage. In certain implementations, the TDO player supports a script which includes a function that accesses Preference, Demographic, and Interests (PDI) questionnaire responses, and that renders attributes of the user interface based on the responses.

In certain implementations, the process includes downloading, scheduling a download or playing a selected NRT content upon receipt of a command via the user interface. In certain implementations, the process provides a selection for rendering NRT content that has not been stored in non-volatile memory, where the item of NRT content is available for streaming at low-latency. In certain implementations, the NRT content is delivered via the Internet. In certain implementations, the player supports a user interface which identifies event times and actions related to NRT content items. In certain implementations, actions related to NRT services that are available via the user interface further include initial access to NRT services, selections of NRT content for download, completion of a full playback of NRT content, completion of a partial playback of NRT content and exiting NRT services. In certain implementations, the TDO is self-triggered upon completion of receipt of the TDO. In certain implementations, the TDO is executed upon user initiation of NRT services. In certain implementations, the TDO is executed upon user selection of a predetermined television channel. In certain implementations, the method further involves retrieving the TDO as a file within a broadcast transport. In certain implementations, the TDO is fetched from the Internet via a URL provided within metadata defining NRT services.

A computer readable storage medium such as a non-transitory storage medium can be used to store instructions which, when executed on one or more programmed processors, carry out any of the methods described herein.

A device consistent with certain implementations has a processor and a memory. A digital television receiver device receives and stores to the memory a triggered declarative object (TDO), the TDO including a scripted executable routine that is executable by a processor of the digital television receiver device. Upon occurrence of a triggering action, the processor executes the operations of the scripted executable routine to define a user interface (UI) for manipulation of non-real-time (NRT) television content. The processor further executes operations to present the user with the user interface.

In certain implementations, upon receipt of a command via the user interface, the processor downloading, scheduling a download or playing a selected item of NRT content based upon the command via the user interface.

In certain implementations, the user interface includes a plurality of scripted control elements and functions including: a control element that when activated causes the receiver to schedule a particular NRT download to occur at a future time; a control element that when activated causes playback of an indicated item of NRT content when that content is available in local storage; a function that returns an indication of whether or not an item of NRT content is available in local storage; a function that returns an indication of whether or not an item of NRT content is already scheduled for download; a function that returns an amount of available local storage; and a function that deletes an item of NRT content from storage.

Those skilled in the art will recognize, upon consideration of the above teachings, that certain of the above exemplary embodiments are based upon use of a programmed processor. However, the invention is not limited to such exemplary embodiments, since other embodiments could be implemented using hardware component equivalents such as special purpose hardware and/or dedicated processors. Similarly, general purpose computers, microprocessor based computers, micro-controllers, optical computers, analog computers, dedicated processors, application specific circuits and/or dedicated hard wired logic may be used to construct alternative equivalent embodiments.

Those skilled in the art will appreciate, upon consideration of the above teachings, that the program operations and processes and associated data used to implement certain of the embodiments described above can be implemented using disc storage as well as other forms of storage such as non-transitory storage devices including as for example Read Only Memory (ROM) devices, Random Access Memory (RAM) devices, network memory devices, optical storage elements, magnetic storage elements, magneto-optical storage elements, flash memory, core memory and/or other equivalent volatile and non-volatile storage technologies without departing from certain embodiments of the present invention. The term non-transitory does not suggest that information cannot be lost by virtue of removal of power or other actions. Such alternative storage devices should be considered equivalents.

Certain embodiments described herein, are or may be implemented using a programmed processor executing programming instructions that are broadly described above in flow chart form that can be stored on any suitable electronic or computer readable storage medium. However, those skilled in the art will appreciate, upon consideration of the present teaching, that the processes described above can be implemented in any number of variations and in many suitable programming languages without departing from embodiments of the present invention.

While certain illustrative embodiments have been described, it is evident that many alternatives, modifications, permutations and variations will become apparent to those skilled in the art in light of the foregoing description.

## Claims

1. A method, comprising:
receiving a triggered declarative object (TDO) at a digital television receiver device (604), the TDO including a scripted executable routine comprising a script that defines a user interface (UI) for manipulation of non-real-time (NRT) content upon occurrence of a triggering action;
executing the scripted executable routine to define the UI for manipulation of the NRT content; and
the digital television receiver (604), executing the scripted executable routine to present the user with the UI, wherein the scripted executable routine is:
self-triggered so as to be executed upon completion of receipt of the scripted executable routine,
executed responsive to a trigger object received at the digital television receiver,
executed upon user initiation of NRT services, or
executed upon user selection of a predetermined television channel.

2. The method according to claim 1, where said television receiver device (604) processes a scripted control object that causes scheduling a particular NRT download to occur at a future time.

3. The method according to one of claims 1 to 2, where said television receiver device (604) processes a scripted control object that causes playback of an indicated item of NRT content when that content is available in local storage.

4. The method according to one of claims 1 to 3, where said television receiver device (604) processes a script that includes at least one of:
a function that returns an indication of whether or not an item of NRT content is available in local storage,
a function that returns an indication of whether or not an item of NRT content is already scheduled for download,
a function that returns the amount of available local storage,
a function that deletes an item of NRT content from storage, and
a function that accesses Preference, Demographic, and Interests (PDI) questionnaire responses, and that renders attributes of the user interface based on the responses.

5. The method according to one of claims 1 to 4, further comprising downloading, scheduling a download or playing a selected NRT content upon receipt of a command via the user interface.

6. The method according to one of claims 1 to 5, where the user interface provides a selection for rendering NRT content that has not been stored in non-volatile memory, where the item of NRT content is available for streaming at low-latency.

7. A device, comprising:
a processor (338);
a memory (600);
a digital television receiver device (604) configured to receive and store to the memory a triggered declarative object (TDO), the TDO including a scripted executable routine comprising a script that defines a user interface (UI) and that is executable by the processor (338);
the processor (338) being programmed to execute the scripted executable routine to define a user interface (Ul) for manipulation of non-real-time (NRT) content upon occurrence of a triggering action; and
the processor (338) further being programmed to execute the scripted executable routine to present the user with the UI, wherein the scripted executable routine is:
self-triggered so as to be executed upon completion of receipt of the scripted executable routine ,
executed responsive to a trigger object received at the digital television receiver,
executed upon user initiation of NRT services, or
executed upon user selection of a predetermined television channel.

8. The device according to claim 7, wherein the processor (338) is programmed to process a scripted control object that causes scheduling a particular NRT download to occur at a future time.

9. The device according to one of claims 7 and 8, wherein the processor (338) is programmed to process a scripted control object that causes playback of an indicated item of NRT content when that content is available in local storage.

10. The device according to one of claims 7 to 9, wherein the processor (338) is programmed to process a script that includes at least one of:
a function that returns an indication of whether or not an item of NRT content is available in local storage,
a function that returns an indication of whether or not an item of NRT content is already scheduled for download,
a function that returns the amount of available local storage,
a function that deletes an item of NRT content from storage, and
a function that accesses Preference, Demographic, and Interests (PDI) questionnaire responses, and that renders attributes of the user interface based on the responses.

11. The device according to one of claims 7 to 10, wherein the user interface provides a selection for rendering NRT content that has not been stored in non-volatile memory, where the NRT content is available for streaming at low-latency.

12. The device according to one of claims 7 to 11, wherein the processor (338) is programmed to download, schedule a download or play a selected item of NRT content based upon a command received via the user interface.

## Patentansprüche

1. Verfahren, aufweisend:
Empfangen eines triggered declarative object (TDO) an einer digitalen Fernsehempfangsvorrichtung (604), wobei das TDO eine geskriptete ausführbare Routine enthält, die ein Skript aufweist, das eine Benutzeroberfläche (UI) zur Manipulation von Nicht-Echtzeit (NRT)-Inhalt beim Auftreten einer auslösenden Aktion definiert;
Ausführen der geskripteten ausführbaren Routine zur Definition der UI zur Manipulation des NRT-Inhalts; und
der digitale Fernsehempfänger (604) führt die geskriptete ausführbare Routine aus, um dem Benutzer die UI zu präsentieren, wobei die geskriptete ausführbare Routine:
selbstausgelöst ist, so dass sie nach Abschluss des Empfangs der geskripteten ausführbaren Routine ausgeführt wird,
als Reaktion auf ein an dem digitalen Fernsehempfänger empfangenes Triggerobjekt ausgeführt wird,
bei der Benutzerinitiierung von NRT-Diensten ausgeführt wird, oder
bei Benutzerauswahl eines vorbestimmten Fernsehkanals ausgeführt wird.

2. Verfahren nach Anspruch 1, wobei die Fernsehempfangsvorrichtung (604) ein geskriptetes Steuerobjekt verarbeitet, das eine Terminierung eines bestimmten NRT-Downloads zu einem zukünftigen Zeitpunkt bewirkt.

3. Verfahren nach einem der Ansprüche 1 bis 2, wobei die Fernsehempfangsvorrichtung (604) ein geskriptetes Steuerobjekt verarbeitet, das die Wiedergabe eines angegebenen Elements des NRT-Inhalts bewirkt, wenn dieser Inhalt im lokalen Speicher verfügbar ist.

4. Verfahren nach einem der Ansprüche 1 bis 3, wobei die Fernsehempfangsvorrichtung (604) ein Skript verarbeitet, das mindestens eines der folgenden Elemente umfasst:
eine Funktion, die eine Angabe darüber zurückgibt, ob ein Element des NRT-Inhalts im lokalen Speicher verfügbar ist oder nicht,
eine Funktion, die einen Hinweis darauf zurückgibt, ein Element des NRT-Inhalts bereits zum Herunterladen vorgesehen ist oder nicht,
eine Funktion, die die Menge des verfügbaren lokalen Speichers zurückgibt,
eine Funktion, die ein Element des NRT-Inhalts aus dem Speicher löscht, und
eine Funktion, die auf die Antworten auf den PDI-Fragebogen (Preference, Demographic, and Interests) zugreift und die Attribute der Benutzeroberfläche auf der Grundlage der Antworten wiedergibt.

5. Verfahren nach einem der Ansprüche 1 bis 4, das ferner Herunterladen, Terminierung eines Downloads oder Abspielen eines ausgewählten NRT-Inhalts bei Erhalt eines Befehls über die Benutzeroberfläche aufweist.

6. Verfahren nach einem der Ansprüche 1 bis 5, wobei die Benutzeroberfläche eine Auswahl für die Wiedergabe von NRT-Inhalt bereitstellt, der nicht im nichtflüchtigen Speicher gespeichert wurde, wobei der NRT-Inhalt für das Streaming mit geringer Latenz zur Verfügung steht.

7. Vorrichtung, aufweisend:
einen Prozessor (338);
einen Speicher (600);
eine digitale Fernsehempfangsvorrichtung (604), die dazu ausgestaltet ist, ein triggered declarative object (TDO) zu empfangen und in dem Speicher zu speichern, wobei das TDO eine geskriptete ausführbare Routine umfasst, die ein Skript aufweist, das eine Benutzeroberfläche (UI) definiert und das durch den Prozessor (338) ausführbar ist;
wobei der Prozessor (338) dazu programmiert ist, die geskriptete ausführbare Routine auszuführen, um eine Benutzeroberfläche (UI) zur Manipulation von Nicht-Echtzeit (NRT)-Inhalten beim Auftreten einer auslösenden Aktion zu definieren; und
wobei der Prozessor (338) ferner dazu programmiert ist, die geskriptete ausführbare Routine auszuführen, um dem Benutzer die UI zu präsentieren, wobei die geskriptete ausführbare Routine:
selbstausgelöst ist, so dass sie nach Abschluss des Empfangs der geskripteten ausführbaren Routine ausgeführt wird,
als Reaktion auf ein an dem digitalen Fernsehempfänger empfangenes Triggerobjekt ausgeführt wird,
bei der Benutzerinitiierung von NRT-Diensten ausgeführt wird, oder
bei Benutzerauswahl eines vorbestimmten Fernsehkanals ausgeführt wird.

8. Vorrichtung nach Anspruch 7, wobei der Prozessor (338) dazu programmiert ist, ein geskriptetes Steuerobjekt zu verarbeiten, das eine Terminierung eines bestimmten NRT-Downloads zu einem zukünftigen Zeitpunkt bewirkt.

9. Vorrichtung nach einem der Ansprüche 7 und 8, wobei der Prozessor (338) dazu programmiert ist, ein geskriptetes Steuerobjekt zu verarbeiten, das die Wiedergabe eines angegebenen Elements des NRT-Inhalts bewirkt, wenn dieser Inhalt im lokalen Speicher verfügbar ist.

10. Vorrichtung nach einem der Ansprüche 7 bis 9, wobei der Prozessor (338) dazu programmiert ist, ein Skript zu verarbeiten, das mindestens eines der folgenden Elemente umfasst:
eine Funktion, die eine Angabe darüber zurückgibt, ob ein Element des NRT-Inhalts im lokalen Speicher verfügbar ist oder nicht,
eine Funktion, die einen Hinweis darauf zurückgibt, ein Element des NRT-Inhalts bereits zum Herunterladen vorgesehen ist oder nicht,
eine Funktion, die die Menge des verfügbaren lokalen Speichers zurückgibt,
eine Funktion, die ein Element des NRT-Inhalts aus dem Speicher löscht, und
eine Funktion, die auf die Antworten auf den PDI-Fragebogen (Preference, Demographic, and Interests) zugreift und die Attribute der Benutzeroberfläche auf der Grundlage der Antworten wiedergibt.

11. Vorrichtung nach einem der Ansprüche 7 bis 10, wobei die Benutzeroberfläche eine Auswahl für die Wiedergabe von NRT-Inhalt bereitstellt, der nicht im nichtflüchtigen Speicher gespeichert wurde, wobei der NRT-Inhalt für das Streaming mit geringer Latenz zur Verfügung steht.

12. Vorrichtung nach einem der Ansprüche 7 bis 11, wobei der Prozessor (338) dazu programmiert ist, ein ausgewähltes Element des NRT-Inhalts basierend auf einem über die Benutzerschnittstelle empfangenen Befehl herunterzuladen, einen Download zu terminieren oder abzuspielen.

## Revendications

1. Procédé comportant :
la réception d'un objet déclaratif déclenché (TDO) au niveau d'un dispositif récepteur (604) de télévision numérique, le TDO incluant une routine exécutable codifiée par script comportant un script qui définit une interface d'utilisateur (UI) servant à la manipulation de contenu en temps différé (NRT) suite à la survenue d'une action déclencheuse ;
l'exécution de la routine exécutable codifiée par script pour définir l'UI servant à la manipulation du contenu NRT ; et
l'exécution, par le récepteur (604) de télévision numérique, la routine exécutable codifiée par script pour présenter l'UI à l'utilisateur, de la routine exécutable codifiée par script étant :
auto-déclenchée de façon à être exécutée suite à l'achèvement de la réception de la routine exécutable codifiée par script,
exécutée en réaction à un objet déclencheur reçu au niveau du récepteur de télévision numérique,
exécutée suite au lancement par l'utilisateur de services NRT, ou
exécutée suite à la sélection par l'utilisateur d'une chaîne de télévision prédéterminée.

2. Procédé selon la revendication 1, ledit dispositif récepteur (604) de télévision traitant un objet de commande codifié par script qui provoque la planification d'un téléchargement NRT particulier devant avoir lieu ultérieurement.

3. Procédé selon l'une des revendications 1 à 2, ledit dispositif récepteur (604) de télévision traitant un objet de commande codifié par script qui provoque la reproduction d'un élément indiqué de contenu NRT lorsque le contenu en question est disponible dans un stockage local.

4. Procédé selon l'une des revendications 1 à 3, ledit dispositif récepteur (604) de télévision traitant un script qui comprend au moins une fonction parmi :
une fonction qui renvoie une indication selon laquelle un élément de contenu NRT est disponible ou non dans un stockage local,
une fonction qui renvoie une indication selon laquelle le téléchargement d'un élément de contenu NRT est déjà planifié ou non,
une fonction qui renvoie la quantité de stockage local disponible,
une fonction qui supprime un élément de contenu NRT d'un stockage, et
une fonction qui accède à des réponses de questionnaire sur les préférences, l'appartenance démographique et les centres d'intérêt (PDI), et qui restitue des attributs de l'interface d'utilisateur d'après les réponses.

5. Procédé selon l'une des revendications 1 à 4, comportant en outre le téléchargement, la planification du téléchargement ou la lecture d'un contenu NRT sélectionné suite à la réception d'une commande via l'interface d'utilisateur.

6. Procédé selon l'une des revendications 1 à 5, l'interface d'utilisateur fournissant une sélection servant à restituer un contenu NRT qui n'a pas été stocké en mémoire non volatile, l'élément de contenu NRT étant disponible pour une diffusion en flux à faible latence.

7. Dispositif comportant :
un processeur (338) ;
une mémoire (600) ;
un dispositif récepteur (604) de télévision numérique configuré pour recevoir et stocker dans la mémoire un objet déclaratif déclenché (TDO), le TDO incluent une routine exécutable codifiée par script comportant un script qui définit une interface d'utilisateur (UI) et qui est exécutable par le processeur (338) ;
le processeur (338) étant programmé pour exécuter la routine exécutable codifiée par script afin de définir une interface d'utilisateur (UI) servant à la manipulation de contenu en temps différé (NRT) suite à la survenue d'une action déclencheuse ; et
le processeur (338) étant en outre programmé pour exécuter la routine exécutable codifiée par script afin de présenter l'UI à l'utilisateur, la routine exécutable codifiée par script étant :
auto-déclenchée de façon à être exécutée suite à l'achèvement de la réception de la routine exécutable codifiée par script,
exécutée en réaction à un objet déclencheur reçu au niveau du récepteur de télévision numérique,
exécutée suite au lancement par l'utilisateur de services NRT, ou
exécutée suite à la sélection par l'utilisateur d'une chaîne de télévision prédéterminée.

8. Dispositif selon la revendication 7, le processeur (338) étant programmé pour traiter un objet de commande codifié par script qui provoque la planification d'un téléchargement NRT particulier devant avoir lieu ultérieurement.

9. Dispositif selon l'une des revendications 7 et 8, le processeur (338) étant programmé pour traiter un objet de commande codifié par script qui provoque la reproduction d'un élément indiqué de contenu NRT lorsque le contenu en question est disponible dans un stockage local.

10. Dispositif selon l'une des revendications 7 à 9, le processeur (338) étant programmé pour traiter un script qui comprend au moins une fonction parmi :
une fonction qui renvoie une indication selon laquelle un élément de contenu NRT est disponible ou non dans un stockage local,
une fonction qui renvoie une indication selon laquelle le téléchargement d'un élément de contenu NRT est déjà planifié ou non,
une fonction qui renvoie la quantité de stockage local disponible,
une fonction qui supprime un élément de contenu NRT d'un stockage, et
une fonction qui accède à des réponses de questionnaire sur les préférences, l'appartenance démographique et les centres d'intérêt (PDI), et qui restitue des attributs de l'interface d'utilisateur d'après les réponses.

11. Dispositif selon l'une des revendications 7 à 10, l'interface d'utilisateur fournissant une sélection servant à restituer un contenu NRT qui n'a pas été stocké en mémoire non volatile, le contenu NRT étant disponible pour une diffusion en flux à faible latence.

12. Dispositif selon l'une des revendications 7 à 11, le processeur (338) étant programmé pour télécharger, planifier le téléchargement ou lire un élément sélectionné de contenu NRT sur la base d'une commande reçue via l'interface d'utilisateur.
